# EUROPEAN PATENT SPECIFICATION

(11) **EP 0 693 518 B1**
(45) Date of publication and mention of the grant of the patent: **11.04.2001**
(21) Application number: 95116675.0
(22) Date of filing: 30.05.1991
(51) Int. Cl.: C08G 73/10

(54) **Readily processable polyimide and preparation process of the same**
Leicht zu verarbeitendes Polyimid und dessen Herstellung
Polyimide facile à travailler et procédé pour sa préparation

(30) Priority: 01.06.1990 JP 14127490; 27.06.1990 JP 16663490; 27.06.1990 JP 16663790; 18.07.1990 JP 18788590; 26.07.1990 JP 19637490
(43) Date of publication of application: 24.01.1996
(62) Divisional of application: 91304893.0
(73) Proprietor: MITSUI CHEMICALS, INC., Tokyo (JP)
(72) Inventor: Tamai, Shoji, 2882, Iijima-cho, Sakae-ku, Kanagawa-ken, 247 (JP); Ohta, Masahiro, Kanagawa-ken 248 (JP); Yamaguchi, Akihiro, Kamakura-shi, Kanagawa-ken, 248 (JP)
(74) Representative: Rackham, Anthony Charles

(56) References cited:
- EP-A- 0 276 922
- EP-A- 0 283 835
- EP-A- 0 299 865
- EP-A- 0 349 720
- EP-A- 0 350 203
- US-A- 4 910 288

## Description

The present invention relates to a polyimide used for melt-processing, and more particularly relates to a polyimide having an excellent processability, and to a process for preparing the same.

Polyimide obtained by reacting tetracarboxylic dianhydride with diamine has very high heat-resistance and is additionally excellent in mechanical strengths, dimensional stability, flame retardancy and electrical insulation. On account of such favorable performance, polyimide has been conventionally used in the field of electric and electronic apparatus, space and aeronautic equipment and transportation machinery. Thus, polyimide is a functional resin which is expected for wide use in the field where heat resistance is required. Required performance and application methods are diversified accompanied by the extension of field for use. Various kinds of polyimide having excellent characteristics have been developed to meet these demands.

Some of the polyimide, however, have no definite glass transition temperature, though excellent in heat resistance. Consequently, the polyimide must be processed by such means as sinter molding, when it is used as a molding material. Other kinds of polyimide are soluble in solvents such as halogenated hydrocarbons, even though excellent in processability, and have a disadvantage in solvent resistance. Thus, the conventionally developed polyimide has both merits and drawbacks in its performance.

Conventionally known polyimide has been commonly difficult to process. These kinds of polyimide are thermosetting resin. Hence it is difficult to apply melt-processing method which can operate with ease and specific processing method such as sintering must be employed.

For example, polyimide prepared from pyromellitic dianhydride and 4,4'-diaminodiphenyl ether and having a fundamental skeleton of the following formula (I): 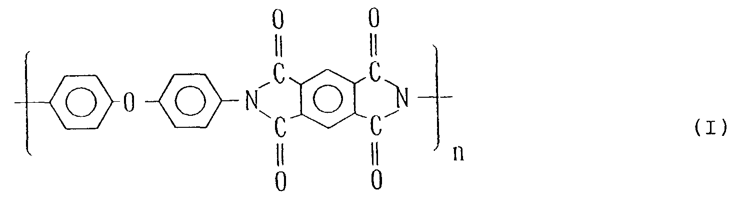 has no distinct glass transition temperature and is difficult to process as a molding material, though excellent in heat resistance. It has been well known that the polyimide must be processed by means of sintering.

Another polyimide obtained by reacting pyromellitic dianhydride with 1,4-bis(4-aminophenoxy)benzene has been known for a long time as disclosed in SU-188,005. The polyimide, however, exhibits no melt-flowability at all at 450 °C and is quite difficult to process in molten state.

Further, polyimide prepared from 3,3',4,4'-diphenylethertetracarboxylic dianhydride and 1,4-bis(4-aminophenoxy)benzene has been disclosed in US 4,855,391 and EP 283,835. However, no description has been found at all on the melt-flowability and injection moulding of the polyimide.

Therefore, in order to extend utilization of polyimide in the field where excellent properties of polyimide can be applied, particularly in the high technology field, it is extremely important to find out polyimide having a specific structure which can be melt processed while maintaining the various excellent characteristics of polyimide.

EP 349,720 describes a moulding method for preparing a polyetherimide blend where a bisimide or imide oligomer is added to improve crystallisation. The polyetherimides are prepared inter alia using aromatic bisamines.

EP 299,865 aims to provide polyimides which have low dielectric properties.

EP 350,203 describes the preparation of polyimides said to have high temperature stability and includes the preparation of a polyimide from 4,4'-(p-phenylenedioxy) diphthalic dianhydride with a range of aromatic diamines and a dicarboxylic anhydride such as phthalic anhydride.

An object of the present invention is to provide polyimide having excellent processability, good chemical resistance and outstanding transparency in addition to an excellent heat resistance which is an essential characteristic of polyimide.

According to one aspect of the present invention there is provided a polyimide obtained by blocking the chain end of a polymer molecule with a divalent aromatic group derived from phthalic anhydride, the polyimide comprising a recurring structural unit represented by the formula: 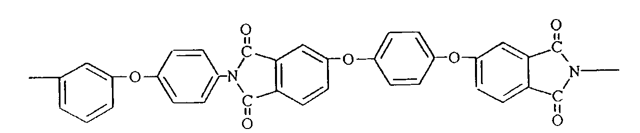 and/or

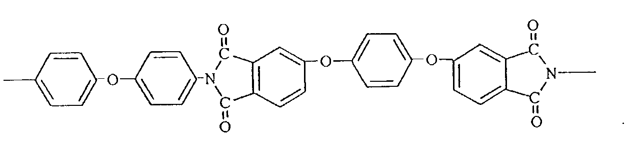

According to another aspect of the present invention there is provided a process for the preparation of a readily processable polyimide in which a diamine having the formula : 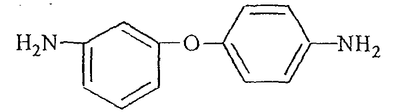 and/or 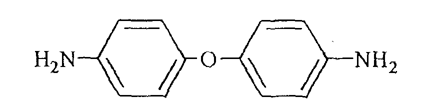 is reacted with 4,4'-(p-phenylenedioxy)diphthalic dianhydride in the presence of phthalic anhydride in an amount of from 0.01 to 1.0 mole per mole of the diamine, excluding the case where the diamine is 1.3-bis(4-aminophenoxy) benzene or 1,4-bis(4-aminophenoxy)benzene, and the resulting polyamic acid is thermally or chemically imidized.

The polyimide of the present invention has excellent heat and chemical resistance, good transparency, outstanding processability due to thermoplasticity and can be melt-processed. Thus the polyimide is very useful for space and aeronautic equipment, electric and electronic apparatus and heat resistant adhesives.

The polyimide of the present invention is blocked at the chain end of a polymer molecule with a divalent aromatic group derived from phthalic anhydride of the formula (X): 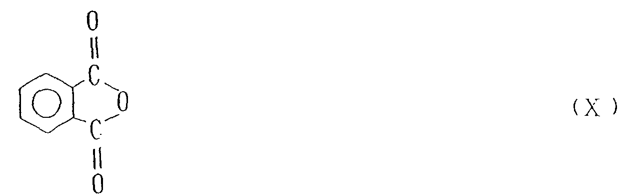 and essentially consists of a recurring structural unit represented by the following formula: 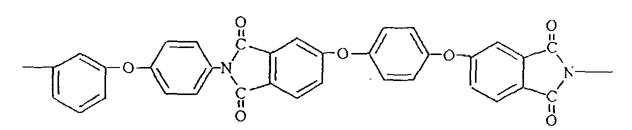 and/or

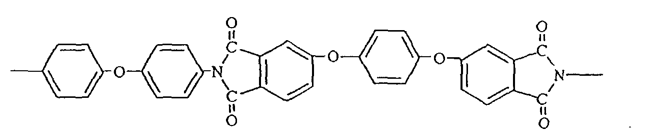

The polyimide of the invention can be prepared by reacting a tetracarboxylic acid dianhydride with a diamine in the presence of phthalic anhydride and thermally or chemically imidizing the resulting polyamic acid having the end of polymer chain blocked with a divalent group derived from phthalic anhydride.

The diamines used in the invention are 4,4'-diaminodiphenyl ether and 3,4'-diaminodiphenyl ether.

The tetracarboxylic acid dianhydride component used in the invention is 4,4'-bis(p-phenylenedioxy)diphthalic dianhydride of the formula (XII):

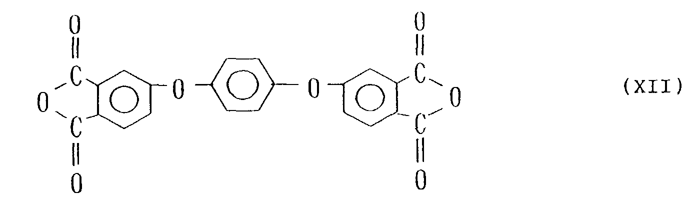

The polyimide of the invention is prepared by using the above diamines. These diamines can also be used as a mixture with other diamines as long as giving no adverse effect on the good properties of the polyimide.

Other diamines which can be used as a mixture include, for example, m-phenylenediamine, o-phenylenediamine, p-phenylenediamine, m-aminobenzylamine, p-aminobenzylamine, bis(3-aminophenyl)ether, (3-aminophenyl)(4-aminophenyl) ether, bis(3-aminophenyl)sulfide, (3-aminophenyl)(4-aminophenyl) sulfide, bis(4-aminophenyl)sulfide, bis(3-aminophenyl) sulfoxide, (3-aminophenyl)(4-aminophenyl) sulfoxide, bis(4-aminophenyl) sulfoxide, bis(3-aminophenyl) sulfone, (3-aminophenyl)(4-aminophenyl) sulfone, bis(4-aminophenyl) sulfone, 3,3'-diaminobenzophenone, 3,4'-diaminobenzophenone, 4,4'-diaminobenzophenone, 3,3'-diaminodiphenylmethane, 3,4'-diaminodiphenylmethane, 4,4'-diaminodiphenylmethane, bis [4-(3-aminophenoxy)phenyl) methane, bis [4-(4-aminophenoxy)phenyl] methane, 1,1-bis [4-(3-aminophenoxy)phenyl] ethane, 1,1-bis [4-(4-aminophenoxy)phenyl] ethane, 1,2-bis [4-(3-aminophenoxy)phenyl] ethane, 1,2-bis [4-(4-aminophenoxy)phenyl] ethane, 2,2-bis [4-(3-aminophenoxy)phenyl] propane, 2,2-bis [4-(4-aminophenoxy)phenyl] propane, 2,2-bis [4-(3-aminophenoxy)phenyl] butane, 2,2-bis [4-(3-aminophenoxy)phenyl] -1,1,1,3,3,3-hexafluoropropane, 2,2-bis [4-(4-aminophenoxy)phenyl] -1,1,1,3,3,3-hexafluoropropane, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 4,4'-bis(3-aminophenoxy)biphenyl, 4,4'-bis(4-aminophenoxy)biphenyl, bis [4-(3-aminophenoxy)phenyl] ketone, bis [4-(4-aminophenoxy)phenyl] ketone, bis [4-(3-aminophenoxy)phenyl] sulfide, bis [4-(4-aminophenoxy)phenyl] sulfide, bis [4-(3-aminophenoxy)phenyl] sulfoxide, bis [4-(4-aminophenoxy)phenyl] sulfoxide, bis [4-(3-aminophenoxy)phenyl] sulfone, bis [4-(4-aminophenoxy)phenyl] sulfone, bis [4-(3-aminophenoxy)phenyl] ether, bis [4-(4-aminophenoxy)phenyl] ether, 1,4-bis [4-(3-aminophenoxy)benzoyl] benzene, 1,3-bis (4-(3-aminophenoxy)benzoyl] benzene, 4,4'-bis [-(4-aminophenoxy)benzoyl] diphenyl ether, 4,4'-bis [3-(3-aminophenoxy)benzoyl] diphenyl ether, 4,4'-bis [4-(4-amino-α,α-dimethylbenzyl)phenoxy) benzophenone, 4,4'-bis [4-(4-amino-α,α-dimethylbenzyl)phenoxy] diphenyl sulfone, bis [4- {4-(4-aminophenoxy)phenoxy} phenyl] sulfone, 1,4-bis [4-(4-aminophenoxy)-α,α-dimethylbenzyl) benzene, 1,3-bis(4-(4-aminophenoxy)-α,α-dimethylbenzyl] benzene. These diamines are used singly or as a mixture.

A portion of the phthalic anhydride illustrated by the formula(X) in the invention can be replaced by other dicarboxylic acid dianhydride as long as giving no adverse effect on the good properties of the polyimide.

Exemplary dicarboxylic acid dianhydride which can replace a portion of the phthalic anhydride include 2,3-benzophenonedicarboxylic anhydride, 3,4-benzophenonedicarboxylic anhydride, 2,3-dicarboxyphenyl phenyl ether anhydride, 3,4-dicarboxyphenyl phenyl ether anhydride, 2,3-biphenyldicarboxylic anhydride, 3,4-biphenyldicarboxylic anhydride, 2,3-dicarboxyphenyl phenyl sulfone anhydride, 3,4-dicarboxyphenyl phenyl sulfone anhydride, 2,3-dicarboxyphenyl phenyl sulfide anhydride, 3,4-dicarboxyphenyl phenyl sulfide anhydride, 1,2-naphthalenedicarboxylic anhydride, 2,3-naphthalenedicarboxylic anhydride, 1,8-naphthalenedicarboxylic anhydride, 1,2-anthracenedicarboxylic anhydride, 2,3-anthracenedicarboxylic anhydride and 1,9-anthracenedicarboxylic anhydride.

Phthalic anhydride of the formula X is used in an amount of from 0.001 to 1.0 mole per mole of the sum of the diamine compounds used. Amounts less than 0.001 mole lead to viscosity increase in high temperature processing and impair melt processability. On the other hand, amounts exceeding 1.0 mole cause reduction of mechanical strength. Preferred amount for use is in the range of from 0.01 to 0.5 mole.

In the preparation process of the invention, the reaction is preferably carried out in an organic solvent. Exemplary solvents which can be used include: N,N-dimethylformamide, N,N-dimethylacetamide, N,N-diethylacetamide, N,N-dimethylmethoxyacetamide, N-methyl-2-pyrrolidone, 1,3-dimethyl-2-imidazolidinone, N-methylcaprolactam, 1,2-dimethoxyethane-bis(2-methoxyethyl)ether, 1,2-bis(2-methoxyethoxy)ethane, bis (2-(2-methoxyethoxy)ethyl) ether, tetrahydrofuran, 1,3-dioxane, 1,4-dioxane, pyridine, picoline, dimethyl sulfoxide, dimethyl sulfone, tetramethylurea, hexamethylphosphoramide, phenol, o-cresol, m-cresol, p-cresol, m-cresylic acid, p-chlorophenol and anisole. These organic solvents can be used singly or as a mixture.

In the practice of the invention, the diamine, the tetracarboxylic acid dianhydride and the phthalic anhydride are added to the organic solvent and the reaction is carried out. Any of the following addition method can be conducted in the reaction.
(a) After reacting diamine with tetracarboxylic acid dianhydride, phthalic anhydride is added and the reaction is continued.
(b) After reacting diamine with phthalic anhydride, tetracarboxylic acid dianhydride is added and the reaction is continued.
(c) Diamine, tetracarboxylic acid dianhydride and phthalic anhydride are added at the same time and the reaction is carried out.

The reaction temperature is usually 250 °C or less, preferably 50 °C or less.

No particular limitation is imposed on the reaction pressure. The reaction can be sufficiently carried out under atmospheric pressure. The reaction time differs depending upon the kind of solvent and reaction temperature. The reaction time of 4 to 24 hours is usually sufficient.

The resultant polyamic acid is converted to polyimide having recurring structural units corresponding to the polyamic acid by thermally imidizing at 100 to 400 °C or chemically imidizing with acetic anhydride or other imidizing agent.

Alternatively, polyimide can also be prepared by suspending or dissolving diamine, tetracarboxylic acid dianhydride and phthalic anhydride in an organic solvent and then by heating to carry,out formation of the polyamic acid precursor and imidization at the same time.

That is, film or powder of polyimide can be obtained by conventionally known method.

Every polyimide thus obtained is an aromatic polyetherimide having imide bonds and ether bonds in a polymer molecule. Glass transition temperature of the polyimide is in the temperature range of from 150 to 270 °C and the polyimide can be used for melt processing.

The melt viscosity of the polyimide can be set on 30,000 poise or less in shear rate of 1,000 sec⁻¹ at the temperature range of 300 to 450°C . Therefore, the polyimide can be used as a material for extrusion moulding and injection moulding. Moulding conditions are dependent upon the structure and molecular weight of the polyimide used. Particularly, when the polyimide is applied as a material for injection moulding, the moulding is usually carried out under the conditions of a temperature of from 300 to 450°C and injection pressure of from 50 to 2,000 kg/cm² by means of conventional processing equipment for an engineering plastic resin.

In carrying out melt-processing of the polyimide of the invention, other thermoplastic resins can also be added in a suitable amount depending upon the object of the invention as long as the objects of the invention is not impaired.

Exemplary thermoplastic resins which can be used include, polyethylene, polypropylene, polycarbonate, polyarylate, polyamide, polysulfone, polyether sulfone, polyether ether ketone, polyether ketone, polyphenylene sulfide, polyamideimide, polyetherimide and modified polyphenylene oxide.

Fillers which are commonly used for thermoplastic resin compositions can also be used as long as giving no adverse effects on the objects of the invention. Exemplary fillers include, graphite, carborundum, silica powder, molybdenum disulfide, fluoro resins and other abrasion resistance improvers; glass fibers, carbon fibers, boron fibers, silicon carbide base fibers, carbon whiskers, asbestos, metallic fibers, cellamic fibers and other reinforcements; antimony trioxide, magnesium carbonate, calcium carbonate and other flame retardants; clay, mica and other electrical property improvers; asbestos, silica, graphite and other tracking resistance improvers; barium sulfate, silica, calcium metasilicate and other acid resistance improvers; iron powder, zinc powder, aluminum powder, copper powder and other thermal conductivity emprovers; and other miscellaneous materials such as glass beads, glass sphere, talc, diatomaceous earth, alumina, silicate balloons, hydrated alumina, metal oxides and coloring materials.

The present invention will hereinafter be illustrated further in detail by way of Examples, Comparative Examples and Reference Examples, and with reference to the accompanying drawings, in which:

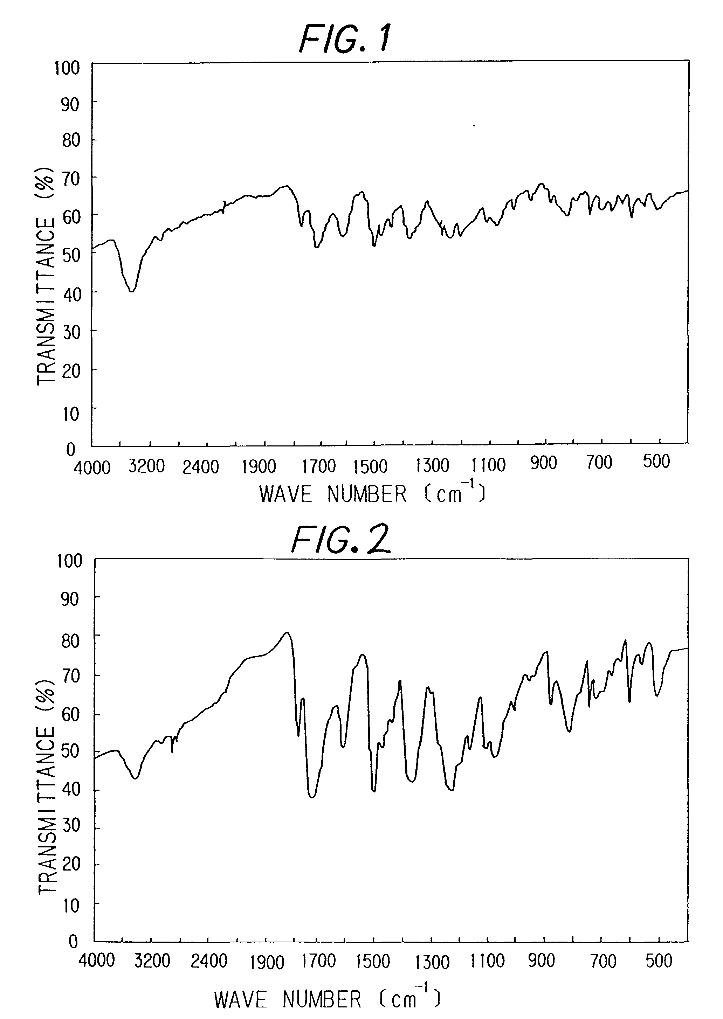

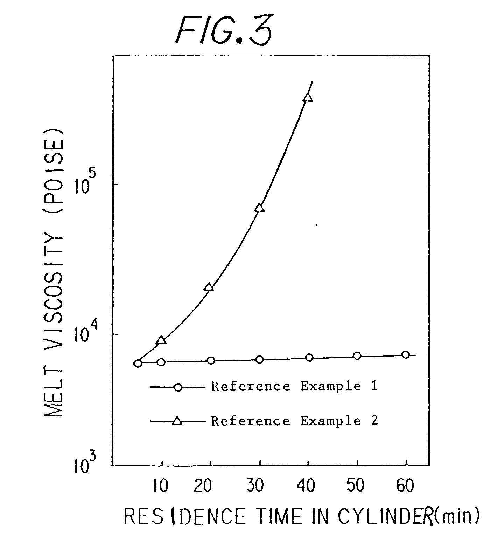

Figures 1 and 2 illustrate the IR absorption spectrum of polyimide powder respectively obtained in Example 1 according to the invention and Reference Example 1, and Figure 3 illustrates the results obtained by changing the retention time in the cylinder of a flow-tester in order to compare processing stability of polyimide obtained with the Reference Examples.

Physical properties in the Examples, Comparative Examples and Reference Examples were measured by the following methods:
Tg, Tc, Tm :
   Measured by DSC(Shimadzu DT-40, Series DSC-41M),
5% Weight loss temperature :
   Measured by DTG(Shimadzu DT-40, Series DTG-40M) in the air, and
Melt viscosity :
   Measured with Shimadzu-Koka Type Flow Tester
   CFT 500A under 100 kg load.

### Example 1

To a reaction vessel equipped with a stirrer, reflex condenser, water separator and nitrogen inlet tube, 120.0 g (0.6 mole) of 4,4'-diaminodiphenyl ether, 231.6 g (0.57 mole) of 4,4'-(p-phenylenedioxy)dipthalic dianhydride, 7.10 g (0.048 mole) of phthalic anhydride, 8.4 g of γ -picoline and 1435 g of m-cresol were charged. The mixture was heated to 145 °C with stirring in a nitrogen atmosphere while distilling out about 20 cc of water and further reacted at 140 to 150 °C for 4 hours. The reaction mixture was then cooled to room temperature and poured into about 10ℓ of methyl ethyl ketone. Precipitated polyimide powder was filtered, washed with methyl ethyl ketone and dried at 180 °C for 24 hours under reduced pressure to obtain 332.0 g (98.5% yield) of polyimide powder having an inherent viscosity of 0.69 dℓ/g.

The inherent viscosity was measured at 35 °C in a solution obtained by heat-dissolving 0.50 g of the polyimide powder in 100 m ℓ of a solvent mixture of p-chorophenol/phenol (9/1 by weight). The polyimide powder had a glass transition temperature of 228 °C and a 5% weight loss temperature of 548 °C in the air.

The IR absorption spectrum of the polyimide powder is illustrated in Figure 1. In the spectrum, characteristic absorption band of imide near 1780 cm⁻¹ and 1720 cm⁻¹, and characteristic absorption bond of ether linkage near 1240 cm⁻¹ were clearly observed.

Following results were obtained in elemental analysis of the polyimide powder thus obtained.

| Elemental analysis | | | |
|---|---|---|---|
| | C | N | H |
| Calculated (%) | 72.11 | 4.98 | 3.19 |
| Found (%) | 72.05 | 4.99 | 3.14 |

The polyimide powder was insoluble in chlorinated hydrocarbon solvents such as methylene chloride and chloroform.

Melt viscosity of the polyimide powder thus obtained was measured with a Koka type flow tester under 100 kg load by using an oriffice having a diameter of 0.1 cm and a length of 1 cm. The melt viscosity was 8600 poise at 380 °C. The strand obtained was light yellow and flexible.

Processing stability of the polyimide powder thus obtained was evaluated by measuring the melt viscosity when retention time is changed in the cylinder of the flow tester at 380 °C under 100 kg load. Melt viscosity was almost constant even though retention time in the cylinder was extended. Thus heat stability of the polyimide powder was good.

### Comparative Example 1

Polyimide powder was prepared by carrying out the same procedures as described in Example 1 except that phthalic anhydride was omitted.

The polyimide powder thus obtained had a glass transition temperature of 229 °C and an inherent viscosity of 0.69 dℓ/g. Melt viscosity of the polyimide powder was measured by changing retention time in the cylinder as conducted in Example 1. Melt viscosity was increased with extended retention time. Thus, heat stability of the polyimide powder thus obtained was inferior to that of the polyimide powder obtained in Example 1.

### Example 2.

To the same reaction vessel as used in Example 1, 120.0 g (0.6 mole) of 3,4'-diaminodiphenyl ether, 231.6 g (0.576 mole) of 4,4'(p-phenylenedioxy)diphthalic dianhydride, 7.10 g (0.048 mole) of phthalic anhydride, 8.4 g of γ -picoline and 1435 g of m-cresol were charged. The mixture was heated to 145 °C with stirring in a nitrogen atmosphere while distilling out about 20 cc of water. The mixture was further reacted at 140 to 150 °C for 4 hours, and thereafter cooled to the room temperature and poured into about 10ℓ of methyl ethyl ketone.

The precipitate thus obtained was filtered and dried at 180°C for 24 hours under reduced pressure to obtain 333 g (98% yield) of polyimide powder. The polyimide powder had an inherent viscosity of 0.61 dℓ/g, a glass transition temperature of 208 °C , and a 5% weigh loss temperature of 545 °C in the air.

Following results were obtained in elemental analysis of the polyimide powder thus obtained.

| Elemental analysis | | | |
|---|---|---|---|
| | C | N | H |
| Calculated (%) | 72.11 | 4.98 | 3.19 |
| Found (%) | 72.07 | 4.96 | 3.18 |

Melt viscosity of the polyimide powder was 3900 poise at 370 °C The strand obtained was light yellow flexible and tough.

### Reference Example 1

To the same reaction vessel as described in Example 1, 100.0 g (0.5 mole) of 4,4'-diaminodiphenyl ether, 117.8 g (0.38 mole) of 3,3',4,4'-diphenylethertetracarboxylic dianhydride, 20.71 g (0.095 mole) of pyromellitic dianhydride, 7.40 g (0.05 mole) of phthalic anhydride, 7.0 g of γ -picoline and 985 g of m-cresol were charged. The mixture was heated to 145 °C with stirring in a nitrogen atmosphere while distilling out about 18 cc of water and further reacted at 140 to 150 °C for 4 hours.

The reaction mixture was then cooled to room temperature and poured into aobut 10 ℓ of methyl ethyl ketone. Precipitated powder was filtered, washed with methyl ethyl ketone and dried at 180°C for 24 hours under reduced pressure to obtain 224.5 g (98.5% yield) of polyimide powder having an inherent viscosity of 0.51 dℓ/g.

The inherent viscosity was measured at 35 °C in a solution obtained by heat-dissolving 0.50 g of the polyimide powder in 100 m ℓ of a solvent mixture of p-chlorophenol/phenyl(9/1 by weight). The polyimide powder had a glass transition temperature of 255 °C and a 5% weight loss temperature of 555 °C.

The IR absorption spectrum of the polyimide powder is illustrated in Figure 2. In the spectrum, characteristic absorption band of imide near 1780 cm⁻¹ and 1720 cm⁻¹ and characteristic absorption band of ether linkage near 1240 cm⁻¹ were clearly observed.

Following results were obtained in elemental analysis of the polyimide powder thus obtained.

| Elemental analysis | | | |
|---|---|---|---|
| | C | N | H |
| Calculated (%) | 70.71 | 6.14 | 2.93 |
| Found (%) | 70.68 | 6.15 | 2.91 |

The polyimide powder was insoluble in chlorinated hydrocarbon solvents such as methylene chloride and chloroform.

Melt viscosity of the polyimide powder thus obtained was measured with a Koka type flow tester under 100 kg load by using an oriffice having a diameter of 0.1 cm and a length of 1 cm. The melt viscosity was 6400 poise at 400 °C. The strand thus obtained was light yellow, transparent and flexible.

Processing stability of the polyimide powder thus obtained was measured by changing retention time in the cylinder of the flow tester at 400 °C under 100 kg load. As results are illustrated in Figure 3. Melt viscosity was almost constant even though retention time in the cylinder was extended. Thus, heat stability of the polyimide powder was good.

### Reference Example 2

Polyimide powder was prepared by carrying out the same procedures as described in Reference Example 1 without using phthalic anhydride. The polyimide powder had a glass transition temperature of 265 °C and an inherent viscosity of 0.51 dℓ/g.

Melt viscosity of the polyimide powder was measured by changing the retention time in the cylinder of the flow tester as carried out in Reference Example 1. As illustrated in Figure 3, melt viscosity increased with extended retention time. Thus, the heat stability of the polyimide powder thus obtained was inferior to that of the polyimide powder obtained in Reference Example 1.

## Claims

1. A polyimide obtained by blocking the chain end of a polymer molecule with a divalent aromatic group derived from phthalic anhydride, the polyimide comprising recurring units represented by the formula: 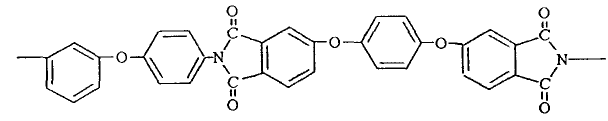 and/or

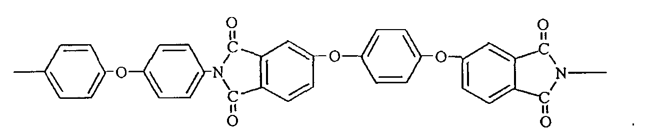

2. A process for the preparation of a readily processable polyimide, in which a diamine having the formula: 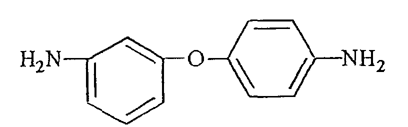 and/or 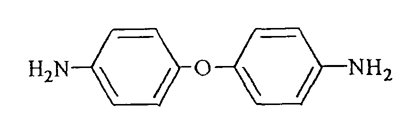 is reacted with 4,4'-(p-phenylenedioxy) diphthalic dianhydride in the presence of phthalic anhydride in amount of from 0.01 to 1.0 mole per mole of the diamine, and the resulting polyamic acid is thermally or chemically imidized.

## Patentansprüche

1. Polyimid, erhalten durch Blockieren des Kettenendes eines Polymermoleküls mit einer bivalenten aromatischen, von Phthalsäureanhydrid stammenden Gruppe, wobei das Polyimid wiederkehrende Einheiten umfasst, die durch die folgende Formel repräsentiert werden: 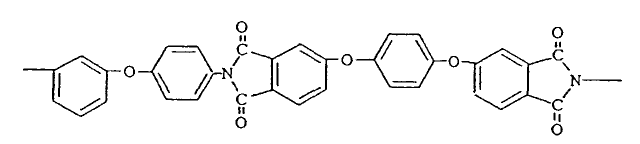 und/oder

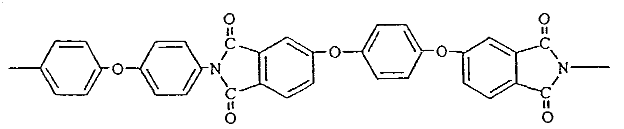

2. Verfahren zur Herstellung eines leicht zu verarbeitenden Polyimids, bei dem ein Diamin der Formel 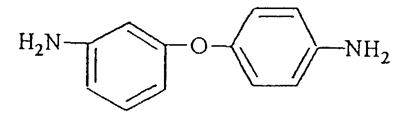 und/oder 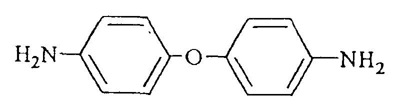 mit 4,4'-(p-phenylendioxy)diphthalsäuredianhydrid in Anwesenheit von Phthalsäureanhydrid in einer Menge von 0,01 bis 1,0 Mol pro Mol des Diamins reagieren gelassen wird, und die resultierende Polyamidsäure thermisch oder chemisch imidisiert wird.

## Revendications

1. Polyimide obtenu par blocage de l'extrémité de la chaîne d'une molécule de polymère par un groupe aromatique divalent dérivé de l'anhydride phtalique, le polyimide comprenant des motifs récurrents représentés par la formule: 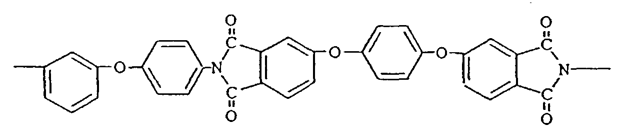 et/ou

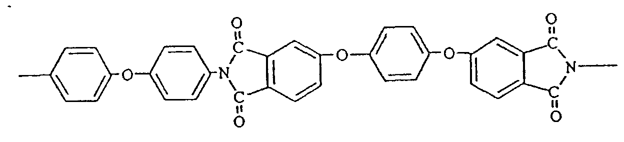

2. Procédé pour la préparation d'un polyimide aisément traitable, dans lequel une diamine ayant la formule: 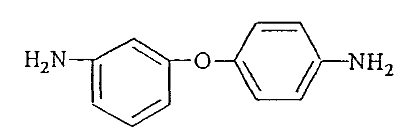 et/ou 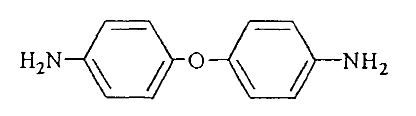 est réagie avec du dianhydride 4,4'-(p-phénylènedioxy) diphtalique en présence d'anhydride phtalique en quantité allant de 0,01 à 1,0 mole par mole de la diamine, et l'acide polyamique résultant est imidisé thermiquement ou chimiquement.
